# FASCICULE DE BREVET EUROPEEN

(11) **EP 4 076 984 B1**
(45) Date de publication et mention de la délivrance du brevet: **15.05.2024**
(21) Numéro de dépôt: 20842716.1
(22) Date de dépôt: 09.12.2020
(51) Int. Cl.: B60C 1/00, C08F 210/02, C08L 7/00

(54) **COMPOSITION DE CAOUTCHOUC**
KAUTSCHUKZUSAMMENSETZUNG
RUBBER COMPOSITION

(30) Priorité: 17.12.2019 FR 1914615
(43) Date de publication de la demande: 26.10.2022
(73) Titulaire: COMPAGNIE GENERALE DES ETABLISSEMENTS MICHELIN, 63040 Clermont-Ferrand (FR)
(72) Inventeur: ARAUJO DA SILVA, José-Carlos, 63040 CLERMONT-FERRAND CEDEX 9 (FR); LEMERLE, Frédéric, 63040 CLERMONT-FERRAND CEDEX 9 (FR)
(74) Mandataire: M.F.P. Michelin
(86) Numéro de dépôt international: PCT/FR2020/052354
(87) Numéro de publication internationale: WO 2021/123568

(56) Documents cités:
- EP-A1- 2 682 423
- FR-A1- 3 078 973

## Description

Le domaine de la présente invention est celui des compositions de caoutchouc comportant un élastomère diénique fortement saturé, en particulier des compositions destinées à être utilisées dans un pneumatique, de préférence dans des flancs de pneumatique.

Un pneumatique comporte usuellement deux bourrelets destinés à entrer en contact avec une jante, un sommet composé d'au moins une armature de sommet et une bande de roulement, deux flancs, le pneumatique étant renforcé par une armature de carcasse ancrée dans les deux bourrelets. Un flanc est une couche élastomère disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.

Dans la fabrication conventionnelle d'un pneumatique, les différents composants constitutifs du sommet, de l'armature de carcasse, des bourrelets et des flancs sont assemblés pour former un bandage de pneumatique. L'étape d'assemblage est suivie d'une étape de conformation du bandage pour donner la forme torique à l'assemblage avant l'étape de cuisson sous presse. Le flanc d'un pneumatique étant soumis à des cycles de déformation comme la flexion au cours du roulage du pneumatique, la composition de caoutchouc constitutive d'un flanc d'un pneumatique doit être à la fois suffisamment flexible et peu hystérétique.

Le flanc étant aussi exposé à l'action de l'ozone, une composition de caoutchouc qui constitue un flanc doit présenter de bonnes propriétés de résistance à l'ozone. En vue de réduire la sensibilité des flancs de pneumatique à l'ozone, il a été proposé dans le document EP 2 682 423 A1 d'utiliser des élastomères copolymères d'éthylène et de 1,3-diène. Néanmoins, il reste une préoccupation constante d'améliorer encore les propriétés des compositions de caoutchouc contenant un copolymère diénique riche en éthylène, en particulier un copolymère diénique pour lequel le taux molaire d'éthylène est supérieur à 50%.

En effet, le flanc doit adhérer à la couche sur laquelle il est disposé lors de la confection du pneumatique. Cette couche est généralement une nappe carcasse ou une gomme de renfort interne dont la composition comprend généralement une matrice élastomérique diénique, généralement constituée de caoutchouc naturel.

Par conséquent, il demeure important que la composition du flanc adhère bien à une composition diénique, en particulier pour améliorer la tenue des interfaces à cuit, et donc la durée de vie du pneumatique.

Poursuivant ses recherches, la Demanderesse a découvert que l'utilisation d'un copolymère d'éthylène et d'un 1,3-diène spécifique, permet d'améliorer l'adhésion de la composition sur une composition diénique.

Ainsi un premier objet de l'invention est une composition de caoutchouc au moins à base de :
- 5 à 95 pce de polyisoprène comportant un taux massique de liaisons 1,4-cis d'au moins 90% de la masse du polyisoprène,
- 5 à 95 pce de copolymère d'éthylène et d'un 1,3-diène de formule (I), les unités éthylène dans le copolymère représentant plus de 50% en mole des unités monomères du copolymère,

   CH₂=CR-CH=CH₂ (I)

   le symbole R représentant une chaîne hydrocarbonée ayant 3 à 20 atomes de carbone, et
- un système de réticulation.

Un autre objet de l'invention est un pneumatique comprenant cette composition.

### I- DÉFINITIONS

Par l'expression « à base de » utilisée pour définir les constituants d'un système catalytique ou d'une composition, on entend le mélange de ces constituants, ou le produit de la réaction d'une partie ou de la totalité de ces constituants entre eux.

Par l'expression « composition à base de », il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé. Sauf indication contraire, les taux des unités résultant de l'insertion d'un monomère dans un copolymère sont exprimés en pourcentage molaire par rapport à la totalité des unités monomères du copolymère.

Par l'expression « partie en poids pour cent parties en poids d'élastomère » (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b". Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Toutes les valeurs de température de transition vitreuse « Tg » décrite dans la présente sont mesurées de manière connue par DSC (Differential Scanning Calorimetry) selon la norme ASTM D3418 (1999).

### II- DESCRIPTION DE L'INVENTION

### II-1 Matrice élastomère

Selon l'invention, la composition comprend de 5 à 95 pce de copolymère d'éthylène et d'un 1,3-diène de formule (I), les unités éthylène dans le copolymère représentant plus de 50% en mole des unités monomères du copolymère,

CH2=CR-CH=CH2 (I)

le symbole R représentant une chaîne hydrocarbonée ayant 3 à 20 atomes de carbone.

De préférence, le copolymère contient des unités éthylène qui représentent entre 50% et 95% en moles des unités monomères du copolymère, c'est-à-dire entre 50% et 95% en moles des unités éthylène et des unités du 1,3-diène. De manière très préférentielle, le copolymère contient des unités éthylène qui représentent de 60% à 90%, de préférence de 70% à 85% en moles, des unités monomères du copolymère.

Le 1,3-diène de formule (I) est un 1,3 diène substitué, qui peut donner lieu à des unités de configuration 1,2 représentée par la formule (1), de configuration 3,4 représentée par la formule (2) et de configuration 1,4 dont la forme trans est représentée ci-après par la formule (3).

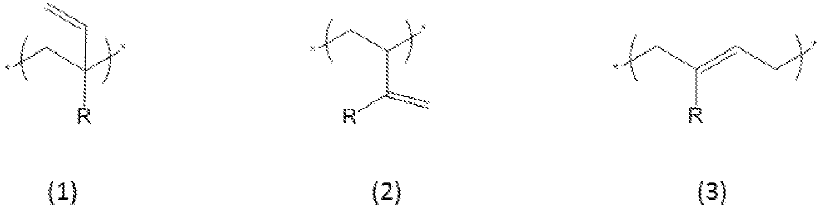

Comme cela est également bien connu, l'unité éthylène est une unité de motif « -(CH₂-CH₂)- ».

Le copolymère utile aux besoins de l'invention est un copolymère d'éthylène et du 1,3-diène, ce qui implique que les unités monomères du copolymère sont des unités résultant de la polymérisation de l'éthylène et du 1,3-diène. Le copolymère comprend donc des unités éthylène et des unités du 1,3-diène. Selon l'invention, le 1,3-diène peut être un seul composé, c'est-à-dire un seul (en anglais « one ») 1,3-diène de formule (I) ou être un mélange de 1,3-diènes de formule (I), les 1,3-diènes du mélange se différenciant les uns des autres par le groupe représenté par le symbole R. Le copolymère utile aux besoins de l'invention est avantageusement un copolymère statistique selon l'un quelconque des modes de réalisation de l'invention.

Selon une première variante de l'invention, le copolymère contient des unités du 1,3-diène de configuration 1,2 ou 3,4 qui représentent plus de 50% en mole des unités du 1,3-diène. En d'autres termes, dans le copolymère les unités du 1,3-diène sont à plus de 50% en mole des unités de configuration 1,2 ou de configuration 3,4. Dans cette variante, le complément à 100% en mole des unités du 1,3-diène dans le copolymère est constitué tout ou partie d'unités du 1,3-diène de configuration 1,4. Selon cette première variante, préférentiellement plus de la moitié des unités du 1,3-diène de configuration 1,4 sont de configuration 1,4-trans, plus préférentiellement toutes les unités du 1,3-diène de configuration 1,4 sont de configuration 1,4-trans.

Selon une deuxième variante de l'invention, dans le copolymère les unités du 1,3-diène sont à plus de 50% de configuration 1,4. En d'autres termes, les unités du 1,3-diène de configuration 1,4 représentent plus de 50% en mole des unités du 1,3-diène. Dans cette variante, le complément à 100% en mole des unités du 1,3-diène dans le copolymère est constitué tout ou partie d'unités du 1,3-diène de configuration 1,2 ou 3,4. De préférence, les unités du 1,3-diène de configuration 1,4 représentent plus de 70% en mole des unités du 1,3-diène. Avantageusement, les unités du 1,3-diène de configuration 1,4 sont pour plus de la moitié d'entre elles de configuration 1,4-trans, ce qui signifie que les unités du 1,3-diène de configuration 1,4-trans représentent plus de 50% en mole des unités du 1,3-diène de configuration 1,4.

Quelle que soit la variante précitée, dans la formule (I) du 1,3-diène, la chaîne hydrocarbonée représentée par le symbole R peut être une chaîne insaturée de 3 à 20 atomes de carbone. De préférence, le symbole R représente une chaîne hydrocarbonée ayant 6 à 16 atomes de carbone.

La chaîne hydrocarbonée représentée par le symbole R peut être une chaîne saturée ou insaturée. De préférence, le symbole R représente une chaîne aliphatique, auquel cas dans la formule (I) du 1,3-diène, la chaîne hydrocarbonée représentée par le symbole R est une chaîne hydrocarbonée aliphatique. Elle peut être une chaîne linéaire ou ramifiée, auquel cas le symbole R représente une chaîne linéaire ou ramifiée. De préférence, la chaîne hydrocarbonée est acyclique, auquel cas le symbole R représente une chaîne acyclique. De préférence, le symbole R représente une chaîne hydrocarbonée acyclique insaturée et ramifiée. La chaîne hydrocarbonée représentée par le symbole R est avantageusement une chaîne acyclique insaturée et ramifiée contenant de 3 à 20 atomes de carbone, en particulier de 6 à 16 atomes de carbone. Très avantageusement, le 1,3-diène est le myrcène ou le β-farnésène.

Selon un mode de réalisation préférentiel de l'invention, le 1,3-diène est le myrcène. Selon un autre mode de réalisation préférentiel de l'invention, le 1,3-diène est le β-farnésène.

De préférence, le copolymère d'éthylène et du 1,3-diène présente une température de vitreuse inférieure à -35°C, de préférence comprise entre -90°C et -35°C.

Le copolymère peut être préparé par un procédé qui comprend la copolymérisation d'éthylène et du 1,3-diène en présence d'un système catalytique à base au moins d'un métallocène de formule (II) et d'un organomagnésien de formule (III)

P(Cp¹Cp²) Nd(BH₄)_{(1+y)-}L_{y}-Nₓ (II)

MgR¹R² (III)

dans lesquels :
- Cp¹ et Cp², identiques ou différents, étant choisis dans le groupe constitué par le groupe cyclopentadiényle de formule C₅H₄ , le groupe fluorényle non substitué de formule C₁₃H₈ et les groupes fluorényles substitués,
- P étant un groupe pontant les deux groupes Cp¹ et Cp² et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle,
- y, nombre entier, étant égal ou supérieur à 0,
- x, nombre entier ou non, étant égal ou supérieur à 0,
- L représentant un métal alcalin choisi dans le groupe constitué par le lithium, le sodium et le potassium,
- N représentant une molécule d'un éther, de préférence diéthyléther ou tétrahydrofuranne,
- R¹ et R², identiques ou différents, représentant un groupe carboné.

A titre de groupes fluorényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les fluorènes substitués, parce que ces derniers sont disponibles commercialement ou facilement synthétisables.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

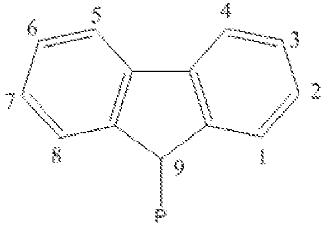

Le système catalytique peut être préparé de façon traditionnelle par un procédé analogue à celui décrit dans la demande de brevet WO 2007054224 ou WO 2007054223. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du copolymère conforme à l'invention.

Alternativement, le système catalytique peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un diène conjugué, l'éthylène ou un mélange d'éthylène et d'un diène conjugué, auquel cas le système catalytique est à base au moins du métallocène, de l'organomagnésien et du monomère de préformation. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un diène conjugué, l'éthylène ou un mélange d'éthylène et d'un diène conjugué. Le diène conjugué à titre de monomère de préformation est de préférence un 1,3-diène tel que le 1,3-butadiène, l'isoprène ou encore un 1,3-diène de formule (I), en particulier le myrcène ou le β-farnésène. Le système catalytique ainsi obtenu peut être utilisé de suite dans le procédé conforme à l'invention ou être stocké sous atmosphère inerte avant son utilisation dans le procédé conforme à l'invention.

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sousproduits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

L'organomagnésien utile aux besoins de l'invention est de formule MgR¹R² dans laquelle R¹ et R², identiques ou différents, représentent un groupe carboné. On entend par groupe carboné un groupe qui contient un ou plusieurs atomes de carbone. De préférence, R¹ et R² contiennent 2 à 10 atomes de carbone. De manière plus préférentielle, R¹ et R² représentent chacun un alkyle. L'organomagnésien est avantageusement un dialkylmagnésien, mieux le butyléthylmagnésium ou le butyloctylmagnésium, encore mieux le butyloctylmagnésium.

Selon l'un quelconque des modes de réalisation de l'invention, le rapport molaire de l'organomagnésien sur le métal Nd constituant le métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées.

Lorsque le copolymère utile aux besoins de l'invention est un copolymère qui a une microstructure telle que définie selon la première variante de l'invention, il est préparé selon le procédé mentionné dans la présente demande en utilisant un métallocène de formule (II) dans laquelle Cp¹ et Cp², identiques ou différents, sont choisis dans le groupe constitué par les groupes fluorényles substitués et le groupe fluorényle non substitué de formule C₁₃H₈. Pour cette variante, conviennent en particulier les métallocènes de formules suivantes dans lesquelles le symbole Flu présente le groupe fluorényle de formule C₁₃H₈ : [{Me₂SiFlu₂Nd(µ-BH₄)₂Li(THF)}_{2]}; [Me₂SiFlu₂Nd(µ-BH₄)₂Li(THF)]; [Me2SiFlu2Nd(µ,-BH₄)(THF)] ; [{Me₂SiFlu₂Nd(µ-BH₄)(THF)}₂] ; [Me₂SiFlu₂Nd(µ-BH₄)].

Lorsque le copolymère utile aux besoins de l'invention est un copolymère qui a une microstructure telle que définie selon la deuxième variante de l'invention, il est préparé selon le procédé mentionné dans la présente demande en utilisant un métallocène de formule (II) dans laquelle Cp¹ désigne un groupe cyclopentadiényle Cp de formule C₅H₄ et Cp² un groupe fluorényle Flu de formule C₁₃H₈.

L'homme du métier sait adapter aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la copolymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Les monomères peuvent être introduits dans le réacteur contenant le solvant de polymérisation et le système catalytique ou inversement le système catalytique peut être introduit dans le réacteur contenant le solvant de polymérisation et les monomères. La copolymérisation est conduite typiquement dans des conditions anhydres et en l'absence d'oxygène, en présence éventuelle d'un gaz inerte. La température de polymérisation varie généralement dans un domaine allant de 30 à 150°C, préférentiellement de 30 à 120°C. De préférence, la copolymérisation est conduite à pression constante d'éthylène.

Au cours de la polymérisation de l'éthylène et du 1,3-diène dans un réacteur de polymérisation, un ajout continu d'éthylène et du 1,3-diène peut être réalisé dans le réacteur de polymérisation, auquel cas le réacteur de polymérisation est un réacteur alimenté. Ce mode de réalisation est tout particulièrement adapté pour la synthèse de copolymère statistique.

La polymérisation peut être stoppée par refroidissement du milieu de polymérisation. Le polymère peut être récupéré selon les techniques classiques connues de l'homme du métier comme par exemple par précipitation, par évaporation du solvant sous pression réduite ou par stripping à la vapeur d'eau.

De préférence, la composition de caoutchouc selon l'invention comprend de 15 à moins de 50 pce, de préférence de 20 à 45 pce, d'un copolymère d'éthylène et d'un 1,3-diène de formule (I) tel que défini dans l'un des quelconques modes de réalisation décrits précédemment, y compris leurs variantes. Il est entendu que le copolymère peut être constitué par un mélange de copolymères qui se différencient par leur microstructure ou par leur macrostructure.

Selon l'invention, la composition comprend en outre de 5 à 95 pce de polyisoprène comportant un taux massique de liaisons 1,4-cis d'au moins 90% de la masse du polyisoprène.

Avantageusement, le polyisoprène est un polyisoprène comportant un taux massique de liaisons 1,4-cis d'au moins 98%, de la masse du polyisoprène.

De préférence, le polyisoprène est choisi dans le groupe constitué par le caoutchouc naturel, les polyisoprènes de synthèse et leurs mélanges. De préférence encore le polyisoprène est un caoutchouc naturel.

Avantageusement, le taux du polyisoprène, de préférence de caoutchouc naturel, dans la composition selon l'invention est compris dans un domaine allant de plus de 50 à 85 pce, de préférence de 55 à 80 pce.

### II-2 Charge renforçante

La composition selon l'invention peut en outre comprendre une charge renforçante. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

La charge renforçante peut comprendre du noir de carbone, de la silice ou un de leurs mélanges. La composition de la première couche du stratifié selon l'invention peut être majoritairement constituée de silice. De préférence, elle peut être majoritairement, de préférence exclusivement, constituée de noir de carbone. De préférence encore, la charge renforçante est constituée d'au moins 80% en poids, de préférence d'au moins 90% en poids de noir de carbone. De préférence, la charge renforçante comprend exclusivement, c'est-à-dire 100% en poids, de noir de carbone. Le noir de carbone peut être un mélange de différents noirs de carbone, auquel cas les taux de noir de carbone se rapportent à l'ensemble des noirs de carbone.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO97/36724-A2 ou WO99/16600-A1).

Le taux de charge renforçante est ajusté par l'homme du métier en fonction de l'usage de la composition de caoutchouc. Avantageusement, le taux de charge renforçante, de préférence de noir de carbone, dans la composition selon l'invention, est compris dans un domaine allant de 15 à 80 pce, de préférence de 20 à 55 pce, de préférence de 25 à 45 pce.

De préférence également, la fraction volumique de charge renforçante, de préférence de noir de carbone, dans la composition selon l'invention est comprise dans un domaine allant de 8% à 15%. De manière connue, la fraction volumique d'un constituant dans une composition de caoutchouc est définie comme étant le rapport du volume de ce constituant sur le volume de l'ensemble des constituants de la composition, étant entendu que le volume de l'ensemble des constituants est calculé en additionnant le volume de chacun des constituants de la composition. La fraction volumique de noir de carbone dans une composition est donc définie comme le rapport du volume de noir de carbone sur la somme des volumes de chacun des constituants de la composition. Le volume d'un constituant est accessible par le ratio entre la masse du constituant introduit dans la composition de caoutchouc et la densité du constituant. De manière connue, la fraction volumique de noir de carbone pour un taux donné en pce de noir de carbone peut être ajustée par l'introduction dans la composition d'un plastifiant.

Comme silices conviennent tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

Pour coupler la silice à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

Lorsque de la silice est utilisée, la teneur en agent de couplage dans la composition de la première couche du stratifié de l'invention peut aisément être ajustée par l'homme du métier. Typiquement le taux d'agent de couplage représente de 0,5% à 15% en poids par rapport à la quantité de silice.

### II-3 Système de réticulation

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0.3 pce et 10 pce, plus préférentiellement entre 0.3 et 5 pce. L'accélérateur primaire de vulcanisation est utilisé à un taux préférentiel compris entre 0.5 et 10 pce, plus préférentiellement compris entre 0.5 et 5 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### II-4 Additifs possibles

La composition de caoutchouc utile aux besoins de l'invention peut comporter également tout ou partie des additifs usuels habituellement utilisés dans les compositions d'élastomères destinées à être utilisées dans un pneumatique, comme par exemple des agents de mise en oeuvre, des plastifiants, des pigments, des agents de protection tels que cires anti-ozone, anti-ozonants chimiques, anti-oxydants. De préférence, la composition de caoutchouc comprend un plastifiant. Comme plastifiants conviennent tous les plastifiants conventionnellement utilisés dans les pneumatiques. A ce titre, on peut citer les huiles préférentiellement non aromatiques ou très faiblement aromatiques choisies dans le groupe constitué par les huiles naphténiques, les huiles paraffiniques, les huiles MES, les huiles TDAE, les huiles végétales, les plastifiants éthers, les plastifiants esters.

### II-5 Préparation des compositions de caoutchouc

Les compositions conformes à l'invention peuvent être fabriquées dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C. On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc utilisable par exemple comme flanc de pneumatique. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation (ou cuisson), le cas échéant la vulcanisation, est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

### II-6 Pneumatique

La présente invention a également pour objet un pneumatique comprenant une composition de caoutchouc selon l'invention.

De préférence, la composition selon l'invention est présente au moins dans un flanc du pneumatique selon l'invention. Avantageusement, cette composition est présente exclusivement dans les flancs du pneumatique.

Le pneumatique selon l'invention peut être destiné à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres.

### III- EXEMPLES

### III-1 Mesures et tests utilisés

### III-1.1 Détermination de la microstructure des élastomères :

La caractérisation spectrale et les mesures de la microstructure des copolymères d'éthylène et du 1,3-myrcène sont réalisées par spectroscopie de Résonance Magnétique Nucléaire (RMN).

Spectromètre : Pour ces mesures, un spectromètre Bruker Avance III HD 400 MHz est utilisé, équipé d'une sonde Bruker cryo-BBFO z-grad 5 mm.

Expériences : Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Cohérence) et HMBC (Heteronuclear Multiple-Bond Corrélation) sont enregistrées avec un nombre de répétition de 128 et un nombre d'incréments de 128. Les expériences sont réalisées à 25°C.

Préparation de l'échantillon : 25 mg d'échantillon sont solubilisés dans 1 mL de chloroforme deutéré (CDCl₃).

Calibration de l'échantillon : Les axes des déplacements chimiques ¹H et ¹³C sont calibrés par rapport à l'impureté protonée du solvant (CHCl₃) à δ_{1H} = 7,2 ppm et δ_{13C} = 77 ppm.

Attribution spectrale pour les copolymères d'éthylène et du 1,3-myrcène : Dans les représentations A, B, C ci-dessous, les symboles R1 et R2 représentent les points de rattachement de l'unité à la chaîne polymère. Les signaux des formes d'insertion du 1,3-diène A, B et C ont été observés sur les différents spectres enregistrés. D'après S. Georges et al., (Polymer 55 (2014) 3869-3878), le signal du groupement -CH= n°8" caractéristique de la forme C présente des déplacements chimiques ¹H et ¹³C identiques au groupement -CH= n°3. Les déplacements chimiques des signaux caractéristiques des motifs A, B et C sont présentés dans le Tableau 1. Les motifs A, B et C correspondent respectivement aux unités de configuration 3,4, de configuration 1,2 et de configuration 1,4-trans. Les quantifications ont été effectuées à partir de l'intégration des spectres RMN 1D ¹H à l'aide du logiciel Topspin. Les signaux intégrés pour la quantification des différents motifs sont :
Ethylène : signal à 1,2 ppm correspondant à 4 protons
Myrcène total : signal n°1 (1,59 ppm) correspondant à 6 protons
Forme A : signal n°7 (4,67 ppm) correspondant à 2 protons
Forme B : signal n°8' (5,54 ppm) correspondant à 1 proton

La quantification de la microstructure est réalisée en pourcentage molaire (%molaire) comme suit : %molaire d'un motif = intégrale 1H d'un motif * 100 / Σ (intégrales 1H de chaque motif).

**[Tableau 1]**

| Tableau 1 : Attribution des signaux ¹H et ¹³C de copolymères Ethylène-Myrcène | | |
|---|---|---|
| **δ_{1H} (ppm)** | **δ_{13C} (ppm)** | **Groupement** |
| **5.54** | 146.4 | 8' |
| **5.07** | 124.6 | 3 + 8" |
| **4.97 - 4.79** | 112.0 | 9' |
| **4.67** | 108.5 | 7 |
| **2.06** | 26.5 | 4 |
| | 31.8 | 5 + 5' + 5" |
| **2.0 - 1.79** | 44.5 | 8 |
| **1.59** | 25.9 et 17.0 | 1 |
| **1.2** | 36.8 - 24.0 | CH₂ éthylène |

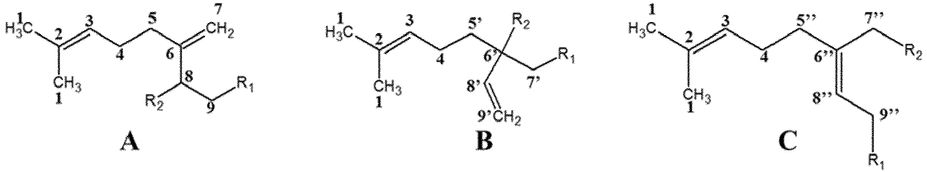

### III-1.2 Détermination de la température de transition vitreuse des polymères :

La température de transition vitreuse est mesurée au moyen d'un calorimètre différentiel ("Differential Scanning Calorimeter") selon la norme ASTM D3418 (1999).

### III-2 Synthèse des polymères :

Dans la synthèse de copolymères conformes à l'invention, le 1,3-diène utilisé est le myrcène, 1,3-diène de formule (I) dans lequel R est un groupe hydrocarboné ayant 6 atomes de carbone : CH₂-CH₂-CH=CMe₂.

Tous les réactifs sont obtenus commercialement exceptés les métallocènes. [{Me₂SiFlu₂Nd(µ-BH₄)₂Li(THF)}] est préparé selon le mode opératoire décrit dans la demande de brevet WO 2007/054224.

Le butyloctylmagnésium BOMAG (20% dans l'heptane, C = 0,88 mol.L⁻¹) provient de Chemtura et est stocké dans un tube de Schlenk sous atmosphère inerte. L'éthylène, de qualité N35, provient de la société Air Liquide et est utilisé sans purification préalable. Le myrcène (pureté ≥ 95%) est obtenu chez Sigma-Aldrich.

### III-2.1-Copolymère d'éthylène et de 1,3-butadiène : élastomère E1

Dans un réacteur contenant à 80°C du méthylcyclohexane, de l'éthylène (Et) et du butadiène (Bd) dans les proportions indiquées dans le Tableau 2, on ajoute du butyloctylmagnésium (BOMAG) pour neutraliser les impuretés du réacteur, puis le système catalytique (voir Tableau 2). A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène et en butadiène dans les proportions définies dans le Tableau 2. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante. Le système catalytique est un système catalytique préformé. Il est préparé dans le méthylcyclohexane à partir d'un métallocène, le [Me₂SiFlu₂Nd(µ-BH₄)₂Li(THF)], d'un co-catalyseur, le butyloctylmagnésium (BOMAG), et d'un monomère de préformation, le 1,3-butadiène, dans les teneurs indiquées dans le Tableau 2. Il est préparé selon une méthode de préparation conforme au paragraphe II. 1 de la demande de brevet WO 2017/093654.

### III-2.2-Copolymère d'éthylène et de myrcène : élastomère E2

Dans un réacteur contenant à 80°C du méthylcyclohexane, de l'éthylène et du myrcène (My) dans les proportions indiquées dans le Tableau 2, on ajoute du butyloctylmagnésium (BOMAG) pour neutraliser les impuretés du réacteur, puis le système catalytique (voir Tableau 2). A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène et en myrcène dans les proportions définies dans le Tableau 2. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu' à masse constante. Le système catalytique est un système catalytique préformé. Il est préparé dans le méthylcyclohexane à partir d'un métallocène, le [Me₂SiFlu₂Nd(µ-BH₄)₂Li(THF)], d'un co-catalyseur, le butyloctylmagnésium (BOMAG), et d'un monomère de préformation, le 1,3-butadiène, dans les teneurs indiquées dans le Tableau 2. Il est préparé selon une méthode de préparation conforme au paragraphe II. 1 de la demande de brevet WO 2017/093654.

La microstructure des polymères et leurs propriétés figurent dans les Tableaux 3 et 4.

**[Tableau 2]**

| Synthèse | E1 | E2 |
|---|---|---|
| Concentration métallocène (mmol/L) | 0,07 | 0,039 |
| Concentration agent alkylant (mmol/L) | 0,36 | 0.2 |
| Ration molaire monomère préformation/ métal Nd | 90 | 90 |
| Composition de l'alimentation (%mol Et/Bd) | 80/20 | - |
| Composition de l'alimentation (%mol Et/My) | - | 65/35 |

**[Tableau 3]**

| Elastomère | E1 | E2 |
|---|---|---|
| Et (%mol) | 78 | 76 |
| Bd (%mol) | 14 | |
| 1,2-cyclohexanediyle (%mol) | 8 | |
| My (%mol) | - | 24 |
| Myrcène 1,4 (%mol/ %mol My) | - | 29 |
| Myrcène 1,2 (%mol/ %mol My) | - | 4 |
| Myrcène 3,4 (%mol/ %mol My) | - | 67 |

**[Tableau 4]**

| Elastomère | Tg (°C) |
|---|---|
| E1 | -40 |
| E2 | -63 |

### III-3 Préparation des compositions de caoutchouc :

Dans les exemples qui suivent, les compositions caoutchouteuses ont été réalisées comme décrit au point II-5 ci-dessus. En particulier, la phase « non-productive » a été réalisée dans un mélangeur de 3 litres pendant 5 minutes, pour une vitesse moyenne de palettes de 50 tours par minute jusqu'à atteindre une température maximale de tombée de 160°C. La phase « productive » a été réalisée dans un outil à cylindre à 23°C pendant 10 minutes.

### III-4 Essais de caoutchouterie :

L'adhésion de plusieurs compositions de caoutchouc comprenant un mélange de caoutchouc naturel et de copolymère d'éthylène et de 1,3-diène sur une composition à base de caoutchouc naturel a été comparée en fonction de la nature et du taux du copolymère d'éthylène et de 1,3-diène.

Les mesures d'adhésion ont réalisées par un test dit de pelage en T ou aussi appelé pelage à 180°. Les éprouvettes de pelage ont réalisées par mise en contact des deux couches (les compositions constitutives des couches étant à l'état cru) dont l'adhésion doit être testée. Une amorce de rupture a été insérée entre les deux couches. Chacune des couches a été renforcée par une nappe composite qui limite la déformation des dites couches sous traction.

L'éprouvette une fois assemblée a été portée à 150°C sous une pression de 16 bars pendant 30 minutes. Des bandes de 30 mm de largeur ont ensuite été découpées au massicot. Les deux côtés de l'amorce de rupture ont été ensuite placées dans les mors d'une machine de traction de marque « Instron ». Les essais ont été réalisés à 20°C et à une vitesse de traction de 100 mm/min. On a enregistré les efforts de traction et on norme ceux-ci par la largeur de l'éprouvette. On a obtenu une courbe de force par unité de largeur (en N/mm) en fonction du déplacement de traverse mobile de la machine de traction (entre 0 et 200 mm). La valeur d'adhésion retenue correspond à la propagation de la rupture au sein de l'éprouvette et donc à la valeur stabilisée moyenne de la courbe. Les valeurs d'adhésion des exemples ont été normées par rapport au témoin (base 100). Un indice supérieur à 100 indique une plus forte amélioration de l'adhésion.

L'adhésion de compositions C1 à C6, conformes à l'invention, a été comparée aux témoins T1 à T6 non-conformes à l'invention qui diffèrent respectivement des compositions C1 à C6 uniquement par la nature du 1,3-diène : 1,3 diène de formule (I) pour les compositions C1 à C6 et 1,3-butadiène pour les compositions T1 à T6 (les élastomères E1 et E2 ont été préparés selon le procédé décrit au point III.2 ci-dessus).

La couche à base de caoutchouc naturel sur laquelle l'adhésion a été testée correspond à une composition classiquement utilisée en couche interne de pneumatique, telle qu'une nappe carcasse ou une sous-couche de bande de roulement, comprenant 100 pce de caoutchouc naturel.

Le Tableau 5 présente les compositions testées (en pce), ainsi que les résultats obtenus.

**[Tableau 5]**

| Compositions | T1 | C1 | T2 | C2 | T3 | C3 | T4 | C4 | T5 | C5 | T6 | C6 |
|---|---|---|---|---|---|---|---|---|---|---|---|---|
| NR(1) | 60 | 60 | 80 | 80 | 20 | 20 | 40 | 40 | 60 | 60 | 80 | 80 |
| Elastomère E1 | 40 | - | 20 | - | 80 | - | 60 | - | 40 | - | 20 | - |
| Elastomère E2 | - | 40 | - | 20 | - | 80 | - | 60 | - | 40 | - | 20 |
| N234(2) | 40 | 40 | 40 | 40 | - | - | - | - | - | - | - | - |
| Silice(3) | - | - | - | - | 48 | 48 | 48 | 48 | 48 | 48 | 48 | 48 |
| Agent de couplage(4) | - | - | - | - | 3,8 | 3,8 | 3,8 | 3,8 | 3,8 | 3,8 | 3,8 | 3,8 |
| DPG(5) | - | - | - | - | 1 | 1 | 1 | 1 | 1 | 1 | 1 | 1 |
| Antioxydant(6) | 2 | 2 | 2 | 2 | 2 | 2 | 2 | 2 | 2 | 2 | 2 | 2 |
| Cire antiozonante(7) | 1 | 1 | 1 | 1 | 1 | 1 | 1 | 1 | 1 | 1 | 1 | 1 |
| Acide stéarique | 1,5 | 1,5 | 1,5 | 1,5 | 1,5 | 1,5 | 1,5 | 1,5 | 1,5 | 1,5 | 1,5 | 1,5 |
| ZnO(8) | 2,5 | 2,5 | 2,5 | 2,5 | 2,5 | 2,5 | 2,5 | 2,5 | 2,5 | 2,5 | 2,5 | 2,5 |
| Accélérateur(9) | 1,3 | 1,3 | 1,3 | 1,3 | 1,3 | 1,3 | 1,3 | 1,3 | 1,3 | 1,3 | 1,3 | 1,3 |
| Soufre | 0,6 | 0,6 | 0,6 | 0,6 | 0,6 | 0,6 | 0,6 | 0,6 | 0,6 | 0,6 | 0,6 | 0,6 |
| | | | | | | | | | | | | |
| Adhésion | 100 | 263 | 100 | 142 | 100 | 152 | 100 | 164 | 100 | 206 | 100 | 109 |

| | | | | | | | | | | | | |
|---|---|---|---|---|---|---|---|---|---|---|---|---|
| (1) NR : caoutchouc naturel (2) Noir de carbone N234 selon la norme ASTM D-1765-2017 (3) Silice « Zeosil 1165MP » commercialisée par Solvay (4) Silane liquide triethoxysilylpropyltetrasulfure (TESPT) « Si69 » de la société Evonik (5) Diphénylguanidine « Perkacit DPG » de la société Flexsys (6) N-1,3-diméthylbutyl-N-phényl-para-phenyldiamine « Santoflex 6-PPD » de la société Flexsys (7) Cire anti-ozone « VARAZON 4959 » de la société Sasol Wax (8) Oxyde de Zinc de grade industriel de la société Umicore (9) N-cyclohexyl-2-benzothiazol-sulfénamide « Santocure CBS » de la société Flexsys | | | | | | | | | | | | |

Ces résultats montrent que l'utilisation d'une composition de caoutchouc conforme à l'invention comprenant un copolymère d'éthylène et de 1,3-diène de formule (I) permet d'améliorer l'adhésion sur une composition diénique par rapport à une composition de caoutchouc non conforme à l'invention comprenant un copolymère d'éthylène et de 1,3-diène.

## Revendications

1. Composition de caoutchouc au moins à base de :
- 5 à 95 pce de polyisoprène comportant un taux massique de liaisons 1,4-cis d'au moins 90% de la masse du polyisoprène,
- 5 à 95 pce de copolymère d'éthylène et d'un 1,3-diène de formule (I), les unités éthylène dans le copolymère représentant plus de 50% en mole des unités monomères du copolymère,
CH₂=CR-CH=CH₂ (I)
le symbole R représentant une chaîne hydrocarbonée ayant 3 à 20 atomes de carbone, et
- un système de réticulation.

2. Composition de caoutchouc selon la revendication 1, dans laquelle le copolymère contient des unités éthylène qui représentent entre 50% et 95%, de préférence de 60% à 90%, de préférence encore de 70% à 85%, en moles, des unités monomères du copolymère.

3. Composition de caoutchouc selon l'une quelconque des revendications précédentes, dans laquelle le copolymère contient des unités du 1,3-diène de configuration 1,2 ou 3,4 qui représentent plus de 50% en mole des unités du 1,3-diène.

4. Composition de caoutchouc selon l'une quelconque des revendications précédentes, dans laquelle le 1,3-diène est le myrcène ou le β-farnésène.

5. Composition de caoutchouc selon l'une quelconque des revendications précédentes, dans laquelle le copolymère présente une température de transition vitreuse inférieure à -35°C, de préférence comprise entre -90°C et -35°C.

6. Composition de caoutchouc selon l'une quelconque des revendications précédentes, dans laquelle le taux du copolymère est compris dans un domaine allant de 15 à moins de 50 pce.

7. Composition de caoutchouc selon l'une quelconque des revendications précédentes, dans laquelle le polyisoprène comporte un taux massique de liaisons 1,4-cis d'au moins 98% de la masse du polyisoprène.

8. Composition de caoutchouc selon l'une quelconque des revendications précédentes, dans laquelle le polyisoprène est choisi dans le groupe constitué par le caoutchouc naturel, les polyisoprènes de synthèse et leurs mélanges, de préférence le polyisoprène est un caoutchouc naturel.

9. Composition de caoutchouc selon l'une quelconque des revendications précédentes, comprenant en outre une charge renforçante.

10. Composition de caoutchouc selon la revendication 9, dans laquelle la charge renforçante comprend majoritairement du noir de carbone.

11. Composition de caoutchouc selon la revendication 9 ou 10, dans laquelle le taux de charge renforçante est compris dans un domaine allant de 15 à 80 pce, de préférence de 20 à 55 pce, de préférence de 25 à 45 pce.

12. Composition de caoutchouc selon l'une quelconque des revendications précédentes, dans laquelle le taux du polyisoprène est compris dans un domaine allant de plus de 50 à 85 pce, le taux du copolymère est compris dans un domaine allant de 15 à moins de 50 pce, et comprenant une charge renforçante comprenant majoritairement du noir de carbone.

13. Pneumatique comprenant une composition de caoutchouc définie à l'une quelconque des revendications 1 à 12.

14. Pneumatique selon la revendication 13, dans lequel la composition de caoutchouc définie à l'une quelconque des revendications 1 à 12 est présente dans au moins un flanc du pneumatique.

## Patentansprüche

1. Kautschukzusammensetzung, die zumindest auf Folgendem basiert:
- 5 bis 95 phr Polyisopren, das einen Gewichtsanteil an 1,4-cis-Bindungen von mindestens 90 ö des Polyisoprengewichts umfasst,
- 5 bis 95 phr eines Ethylen-Copolymers und eines 1,3-Diens der Formel (I), wobei die Ethyleneinheiten im Copolymer mehr als 50 Mol-% der Monomereinheiten des Copolymers darstellen,
CH₂=CR-CH=CH₂ (I),
wobei das Symbol R eine Kohlenwasserstoffkette mit 3 bis 20 Kohlenstoffatomen darstellt, und
- einem Vernetzungssystem.

2. Kautschukzusammensetzung nach Anspruch 1, wobei das Copolymer Ethyleneinheiten enthält, die zwischen 50 Molö und 95 Mol-%, vorzugsweise von 60 Mol-% bis 90 Mol-%, noch mehr bevorzugt von 70 Mol-% bis 85 Mol-%, der Monomereinheiten des Copolymers darstellen.

3. Kautschukzusammensetzung nach einem der vorhergehenden Ansprüche, wobei das Copolymer 1,3-Dieneinheiten mit einer 1,2- oder 3,4-Konfiguration enthält, die mehr als 50 Mol-% der Einheiten des 1,3-Diens darstellen.

4. Kautschukzusammensetzung nach einem der vorhergehenden Ansprüche, wobei es sich beim 1,3-Dien des Copolymers um Myrcen oder ß-Farnesen handelt.

5. Kautschukzusammensetzung nach einem der vorhergehenden Ansprüche, wobei das Copolymer eine Glasübergangstemperatur von weniger als -35 °C, vorzugsweise zwischen -90 °C und -35 °C, aufweist.

6. Kautschukzusammensetzung nach einem der vorhergehenden Ansprüche, wobei der Copolymergehalt in einem Bereich von 15 bis weniger als 50 phr liegt.

7. Kautschukzusammensetzung nach einem der vorhergehenden Ansprüche, wobei das Polyisopren einen Gewichtsanteil an 1,4-cis-Bindungen von mindestens 98 ö des Polyisoprengewichts umfasst.

8. Kautschukzusammensetzung nach einem der vorhergehenden Ansprüche, wobei das Polyisopren ausgewählt ist aus der Gruppe bestehend aus Naturkautschuk, synthetischen Polyisoprenen und Mischungen davon, wobei das Polyisopren vorzugsweise ein Naturkautschuk ist.

9. Kautschukzusammensetzung nach einem der vorhergehenden Ansprüche, das außerdem einen verstärkenden Füllstoff umfasst.

10. Kautschukzusammensetzung nach Anspruch 9, wobei der verstärkende Füllstoff überwiegend Ruß umfasst.

11. Kautschukzusammensetzung nach Anspruch 9 oder 10, wobei der Gehalt des verstärkenden Füllstoffs in einem Bereich von 15 bis 80 phr, vorzugsweise 20 bis 55 phr, vorzugsweise 25 bis 45 phr, liegt.

12. Kautschukzusammensetzung nach einem der vorhergehenden Ansprüche, wobei der Polyisoprengehalt in einem Bereich von mehr als 50 bis 85 phr liegt, der Copolymergehalt in einem Bereich von 15 bis weniger als 50 phr liegt und die einen verstärkenden Füllstoff umfasst, der überwiegend Ruß umfasst.

13. Reifen, der eine in einem der Ansprüche 1 bis 12 definierte Kautschukzusammensetzung umfasst.

14. Reifen nach Anspruch 13, wobei die in einem der Ansprüche 1 bis 12 definierte Kautschukzusammensetzung in mindestens einer Seitenwand des Reifens vorhanden ist.

## Claims

1. Rubber composition at least based on:
- 5 to 95 phr of polyisoprene comprising a content by weight of 1,4-cis bonds of at least 90% of the weight of the polyisoprene,
- 5 to 95 phr of copolymer of ethylene and of a 1,3-diene of formula (I), the ethylene units in the copolymer representing more than 50 mol% of the monomer units of the copolymer,
CH₂=CR-CH=CH₂ (I)
the symbol R representing a hydrocarbon chain having 3 to 20 carbon atoms, and
- a crosslinking system.

2. Rubber composition according to Claim 1, wherein the copolymer contains ethylene units which represent between 50 mol% and 95 mol%, preferably from 60 mol% to 90 mol%, more preferably from 70 mol% to 85 mol%, of the monomer units of the copolymer.

3. Rubber composition according to either one of the preceding claims, wherein the copolymer contains units of the 1,3-diene of 1,2 or 3,4 configuration which represent more than 50 mol% of the units of the 1,3-diene.

4. Rubber composition according to any one of the preceding claims, wherein 1,3-diene is myrcene or β-famesene.

5. Rubber composition according to any one of the preceding claims, wherein the copolymer has a glass transition temperature below -35°C, preferably between -90°C and -35°C.

6. Rubber composition according to any one of the preceding claims, wherein the content of the copolymer is within a range extending from 15 to less than 50 phr.

7. Rubber composition according to any one of the preceding claims, wherein the polyisoprene comprises a content by weight of 1,4-cis bonds of at least 98% of the weight of the polyisoprene.

8. Rubber composition according to any one of the preceding claims, wherein the polyisoprene is selected from the group consisting of natural rubber, synthetic polyisoprenes and mixtures thereof; preferably the polyisoprene is a natural rubber.

9. Rubber composition according to any one of the preceding claims, also comprising a reinforcing filler.

10. Rubber composition according to Claim 9, wherein the reinforcing filler comprises mainly carbon black.

11. Rubber composition according to Claim 9 or 10, wherein the content of reinforcing filler is within a range extending from 15 to 80 phr, preferably from 20 to 55 phr, preferably from 25 to 45 phr.

12. Rubber composition according to any one of the preceding claims, wherein the content of the polyisoprene is within a range extending from more than 50 to 85 phr, the content of the copolymer is within a range extending from 15 to less than 50 phr, and comprising a reinforcing filler comprising mainly carbon black.

13. Tyre comprising a rubber composition defined in any one of Claims 1 to 12.

14. Tyre according to Claim 13, wherein the rubber composition defined in any one of Claims 1 to 12 is present in at least one sidewall of the tyre.
